# EUROPÄISCHE PATENTSCHRIFT

(11) **EP 1 528 991 B1**
(45) Veröffentlichungstag und Bekanntmachung des Hinweises auf die Patenterteilung: **30.04.2008**
(21) Anmeldenummer: 03793718.2
(22) Anmeldetag: 11.08.2003
(51) Int. Cl.: B60N 3/10

(54) **HALTEVORRICHTUNG FÜR BEHÄLTER, WIE GETRÄNKEBEHÄLTER, INSBESONDERE ZUR ANBRINGUNG IN FAHRZEUGEN**
HOLDING DEVICE FOR CONTAINERS, SUCH AS BEVERAGE CONTAINERS, PARTICULARLY FOR MOUNTING IN VEHICLES
DISPOSITIF DE RETENUE POUR RECIPIENTS, TELS QUE DES RECIPIENTS POUR BOISSONS, A MONTER NOTAMMENT DANS DES VEHICULES

(30) Priorität: 16.08.2002 DE 20212850 U
(43) Veröffentlichungstag der Anmeldung: 11.05.2005
(73) Patentinhaber: Weber GmbH & Co. KG Kunststofftechnik und Formenbau, 35683 Dillenburg (DE); Volkswagen Aktiengesellschaft, 38436 Wolfsburg (DE)
(72) Erfinder: PITZER, Jörg, 35239 Steffenberg (DE); RIESS, Markus, 35713 Eschenburg (DE); HEINZEL, Matthias, 35713 Eschenburg (DE); GATZ, Uwe, 35606 Solms (DE); SCHMIDT, Henning, 35239 Steffenberg (DE); FISCHER, Matthias, 29386 Hankensbüttel (DE); BURK, Oliver, 38440 Wolfsburg (DE)
(74) Vertreter: Müller, Eckhard
(86) Internationale Anmeldenummer: PCT/EP2003/008885
(87) Internationale Veröffentlichungsnummer: WO 2004/022386

(56) Entgegenhaltungen:
- DE-A- 4 344 372
- US-A- 2 649 270
- US-A- 3 391 891
- US-A- 5 190 259
- PATENT ABSTRACTS OF JAPAN vol. 1996, no. 04, 30. April 1996 (1996-04-30) & JP 07 315106 A (NIFCO INC), 5. Dezember 1995 (1995-12-05)
- PATENT ABSTRACTS OF JAPAN vol. 1996, no. 10, 31. Oktober 1996 (1996-10-31) & JP 08 142732 A (MITSUBISHI MOTORS CORP), 4. Juni 1996 (1996-06-04)
- PATENT ABSTRACTS OF JAPAN vol. 018, no. 358 (M-1633), 6. Juli 1994 (1994-07-06) & JP 06 092174 A (NIPPON PLAST CO LTD), 5. April 1994 (1994-04-05)
- PATENT ABSTRACTS OF JAPAN vol. 2000, no. 05, 14. September 2000 (2000-09-14) & JP 2000 062510 A (MAZDA MOTOR CORP), 29. Februar 2000 (2000-02-29)

## Beschreibung

Die Erfindung betrifft eine Haltevorrichtung für Behälter, wie Getränkebehälter, insbesondere zur Anbringung in Fahrzeugen, mit einem Gehäuse und einem Deckel, der zwischen einer das Gehäuse im wesentlichen verschließenden Schließstellung, in der die Haltevorrichtung in dem Gehäuse aufgenommen ist, und eine Aufklappstellung, in der der Behälter in die Haltevorrichtung einbringbar ist, verschwenkbar ist, und mit Haltemitteln für den Behälter, die verschwenkbar am Gehäuse gelagert sind, wobei die Haltemittel über Gelenkmittel mit dem Deckel gekoppelt sind.

Eine derartige Haltevorrichtung für Getränkebehälter zur Anbringung in Fahrzeugen ist bereits aus der DE 42 24 700 A1 bekannt.

Diese bekannte Haltevorrichtung weist eine Befestigungskonsole, einen ein- beziehungsweise ausklappbar daran gelagerten Träger zur Aufnahme des Bodens des Getränkebehälters, sowie einen zumindest teilringförmigen Halter auf. Der Halter ist oberhalb des Trägers an der Befestigungskonsole zwischen einer aus- beziehungsweise eingeklappten Stellung verschwenkbar gelagert und deckt den Träger in der eingeklappten Stellung deckelartig ab. Der Träger und der Halter sind über mindestens einen Verbindungshebel derart gelenkig miteinander verbunden, dass der Halter mit dem Ein- beziehungsweise Ausklappen des Trägers selbsttätig in seine ein- beziehungsweise ausgeklappte Stellung überführbar ist.

Ein weiterer Getränkehalter ist aus der DE 195 08 987 A1 bekannt. Dieser Getränkehalter besitzt einen plattenförmigen Stützkörper mit einer Durchgangsöffnung für einen Getränkebehälter, wobei der Stützkörper aus einer klappennahen Ruhelage um eine klappennahe Scharnierachse in eine zur waagrechten Klappe beabstandete Wirkstellung verschwenkbar ist. Der Stützkörper ist mit einem Ende direkt an der Scharnierachse angelenkt und von dieser bis zu seinem freien Ende mit einem von der Aufstandsfläche weggewölbten Verlauf einstückig ausgebildet.

Aus der US 4583707 A ist ein Getränkehalter bekannt, der an der Klappe eines Behälters angeordnet ist. Der Stützkörper dieses Getränkehalters ist aus einer klappennahen Ruhelage in eine beabstandete Wirkstellung verschiebbar. Um den Stützkörper in eine auch für hohe Behälter ausreichend beanstandete Wirkstellung zu verschieben, ist ein Scherengestänge mit Langlochführungen an der Klappe und am Stützkörper vorgesehen, wodurch dieser bekannte Getränkehalter in der Montage aufwendig und in der Fertigung teuer ist.

Eine Haltevorrichtung nach dem Oberbegriff des Anspruchs 1 ist aus der JP 07 315106 A bekannt.

Demgegenüber liegt der vorliegenden Erfindung die Aufgabe zugrunde, eine Haltevorrichtung der eingangs genannten Art dahingehend weiterzubilden, dass mit dieser die Behälter in der Aufklappstellung sicher gehalten sind und die Haltevorrichtung in der Schließstellung nur geringen Bauraum beansprucht. Weiterhin soll die Haltevorrichtung nach einem Nebenaspekt der Erfindung einfach aufgebaut und montierbar sein.

Nach der Erfindung wird diese Aufgabe bei der Haltevorrichtung mit den eingangs genannten Merkmalen im wesentlichen dadurch gelöst, dass die Hebel einends schwenkbar am Deckel und anderenends jeweils an einem der Halter angelenkt sind und unterschiedliche Länge aufweisen.

Durch die Erfindung ist erreicht, dass sich die Halter beim Überführen des Deckels in die Ausklappstellung in der Wirkstellung voneinander weg bewegen und somit auch für höhere Behälter eine sichere Halterung bieten. Beim Überführen des Deckels in die Schließstellung bewegen sich die beiden Halter aufeinander zu und liegen im wesentlichen bündig einander an, so dass der Stauraum in der Schließstellung des Deckels minimal ist. Das Auseinanderfalten beziehungsweise Zusammenfalten der Halter ist mittels der Gelenkmittel mechanisch zwangsgeführt.

Von Vorteil ist der Deckel ausschließlich über die Hebel mit den Halter verbunden und kann somit nicht nur eine Schwenkbewegung bezüglich des Gehäuses ausführen, sondern sich auch beim Überführen der Schließstellung in die Aufklappstellung insgesamt vom Gehäuse weg beziehungsweise zu diesem hin bewegen. Insgesamt sorgt die besondere Anordnung und Ausbildung der Hebel beziehungsweise Schwenkachsen für ein Auseinanderfalten der Halter beim Überführen des Deckels von der Schließstellung in die Aufklappstellung sowie für ein Einklappen der Halter sowie Hebel beim manuellen Überführen des Deckels in die Schließstellung. Zusätzlich kann sich der Deckel auch vom Gehäuse weg beziehungsweise auf dieses hin bewegen und somit nicht nur eine reine Schwenkbewegung ausführen.

Nach einer ersten vorteilhaften Ausgestaltung der Erfindung sind die Schwenkachsen der Halter in einem unteren Randbereich des Gehäuses parallel zueinander versetzt angeordnet.

Von Vorteil sind die Hebel zur Kopplung der Halter mit dem Deckel unterschiedlich lang ausgeführt, wobei bevorzugt ein Längenverhältnis zwischen 1,2:1 bis 2,5:1 vorgesehen sein kann. Von Vorteil ist in dem unteren Halter eine Durchbrechung oder Aussparung vorgesehen, durch welche der Hebel für den oberen Halter durchtreten kann.

Die Hebel sind vorzugsweise in einem Mittelabschnitt des Deckels versetzt zueinander angelenkt. Aufgrund dieser Maßnahme ist zur geführten Zwangsbewegung der Halter für jeden der Halter lediglich ein einziger Hebel vorzusehen, wodurch der mechanische Aufbau der Haltevorrichtung weiter vereinfacht wird. Demgegenüber sind bei dem Stand der Technik die Hebel beziehungsweise Lenkvorrichtungen beidseitig des Halters befestigt, wodurch sich die Zahl der Bauteile erheblich erhöht.

Weiterhin bietet es sich an, den Schwenkbereich der Hebel und/oder Halter durch Anschlagmittel zu begrenzen. Diese Anschlagmittel können beispielsweise im Bereich der Anlenkung der Hebel an den Deckel beziehungsweise der Schwenklager der Halter an dem Gehäuse vorgesehen sein. Es besteht jedoch auch die Möglichkeit, externe Anschlagmittel vorzusehen, wobei sich dann beispielsweise der Deckel aufgrund der besonderen Einbaulage der Haltevorrichtung etwa in einem Fahrzeug an einem Boden oder einem sonstigen Bauteil des Fahrzeuges in der Aufklappstellung abstützen kann.

Zur komfortablen Überführung des Deckels von der Schließstellung in die Aufklappstellung ist zwischen Gehäuse und Haltemitteln eine Antriebsfeder gespannt, die den Deckel in die Aufklappstellung zu überführen trachtet. Werden beispielsweise Verriegelungsmittel, die den Deckel in der Schließstellung lösbar halten, gelöst beziehungsweise entriegelt, wird der Deckel aufgrund der Wirkung der Antriebsfeder selbsttätig in die Aufklappstellung überführt, wobei gleichzeitig zwangsgeführt die Halter von einer zusammengefalteten Stellung in eine aufgefaltete Stellung überführt werden.

Um die Bewegung des Deckels von der Schließstellung in die Aufklappstellung gesteuert durchführen zu können, bietet es sich an, dass zwischen dem Gehäuse und den Haltemitteln eine Bremsvorrichtung vorgesehen ist. Diese Bremsvorrichtung kann beispielsweise auch aus einer Viskositätsbremse bestehen, wobei ein Ritzel der Viskositätsbremse, die beispielsweise an einem der Halter angebracht ist, in einer Verzahnung am Gehäuse abrollt.

Von besonderem Vorteil weisen der untere und obere Halter aufgrund der Anordnung der Schwenkachsen und Ausbildung und/oder Anlenkung der Hebel in der Aufklappstellung des Deckels einen größeren Abstand voneinander auf als in der Schließstellung des Deckels. Aufgrund dieser Maßnahme wird ein sicherer Stand des unter Umständen hohen Behälters in der Haltevorrichtung gewährleistet, wobei die Haltevorrichtung in der Schließstellung nur geringen Bauraum beansprucht.

Die Halter besitzen von Vorteil Ringabschnitte, die dem Behälter wenigstens über einen Teil umfangseitig anliegen.

Weiterhin bietet es sich nach einer anderen vorteilhaften Ausgestaltung der Erfindung an, dass ein Halter, bevorzugt der obere Halter, eine oder mehrere verschwenkbare federbelastete Becherklappen trägt, die dem Behälter umfangsseitig federvorgespannt anliegen. Aufgrund dieser Maßnahme lässt sich die Haltevorrichtung einfach und unproblematisch unterschiedlichen Größen der zu haltenden Behältnisse anpassen, so dass, unabhängig von der jeweiligen Größe des Behältnisses, dieses sicher in der Haltevorrichtung aufgenommen und gehalten ist.

Nach einer weiteren, besonders vorteilhaften Ausgestaltung der Erfindung ist es vorgesehen, dass die Halter sowie gegebenenfalls die Becherklappen im wesentlichen spiegelsymmetrisch bezüglich einer Mittelebene ausgebildet sind, so dass in der Haltevorrichtung nicht nur ein, sondern gegebenenfalls auch zwei Behälter aufgenommen und gehaltert werden können.

Von Vorteil weist der Deckel Verriegelungsmittel auf, die den Deckel in der Schließstellung lösbar am Gehäuse festlegen. Die Verriegelungsmittel können als Verriegelungstaste am freien äußeren Ende des Deckels ausgebildet sein. Auch besteht die Möglichkeit, die Verriegelungsmittel als Drucktaste auszubilden, welche über einen Verriegelungshebel am freien Ende des Deckels angreift. Insoweit bietet es sich ebenfalls an, die Verriegelungstaste beziehungsweise den Verriegelungshebel mittels einer Rückstellfeder wieder in Richtung der Verriegelungsposition des Verriegelungsmittels vorzuspannen.

Dabei ist es von Vorteil vorgesehen, die Haltevorrichtung in der Konsole eines Fahrzeuges einzubauen, wobei bevorzugt der Deckel in der Aufklappstellung einem Boden des Fahrzeuges oder einem sonstigen fahrzeugseitigen Bauteil aufliegt.

Nach einer Weiterbildung der Erfindung weisen die eine oder mehreren Becherklappen am endseitigen freien Ende eine wulstartige, zum Behälter gerichtete Verdickung auf. Der aufzunehmende Behälter wird vorteilhafterweise mittels einer 3-Punkt-Aufnahme an der Haltevorrichtung gehalten. Dabei ist die wulstartige, zum Behälter gerichtete Verdickung so angeordnet, dass sie in der Haltestellung vor bzw. seitlich versetzt zu einer durch die Mittel-Längs-Achse des Behälters gehende Mittenorthogonalen, welche senkrecht auf der Anlagensekante des Behältnisses an dem Halter steht. Hierdurch ist es ermöglicht, dass bei einer Beschleunigung der Haltevorrichtung bzw. des mit einer derartigen Haltevorrichtung ausgestatteten Fahrzeuges die Becherklappe dazu tendiert, die Dose noch fester zu umschließen. Damit ist ein seitliches Ausweichen der Becherklappen weitestgehend vermieden. Es ist jedoch zu berücksichtigen, dass diese vorteilhaften Maßnahmen unter den beschriebenen dynamischen Bedingungen nur bei Behältern bis zu einem gewissen maximalen Durchmesser, zum Beispiel 66 mm, erreicht werden.

Nach einer anderen vorteilhaften Ausgestaltung der Erfindung ist es vorgesehen, dass wenigstens einer der Halter einen Mittelsteg aufweist, dessen freier Endabschnitt ein Knochenprofil besitzt, also eine seitliche, nach außen gerichtete Verdickung entweder einseitig oder beidseitig aufweist. Dieses Knochenprofil des Mittelsteges schmiegt sich dem Umfang des Behälters über einen größeren Bereich an, so dass auch in diesem Falle eine bessere Einklemmung des Behälters unter dynamischen Bedingungen, bspw. bei einer Fahrzeugbeschleunigung, erreicht wird.

Weiterhin ist es von Vorteil vorgesehen, dass eine Oberfläche des eine oder mehrere Becherklappen tragenden Halters in Bezug auf eine Oberkante der Becherklappe nach unten hin zum Deckel abgesenkt ist. Aufgrund dieser Maßnahme wird das Einstecken des Behälters in die Haltevorrichtung erleichtert, da der der Oberfläche des Halters aufgesetzte Behälter einfach gegen die Becherklappe zu verschieben ist. Dabei liegt die Becherklappe an dem Umfang des Behälters an und die Becherklappe wird in die Öffnungsstellung verschwenkt, worauf dann der Becher in die Halter nach unten abgesetzt werden kann. Hierdurch ist eine einfache Einhandbedienung der Haltevorrichtung ermöglicht.

Weiterhin hat es sich als vorteilhaft herausgestellt, dass zwischen Deckel und Halter wenigstens eine seitliche Führung angeordnet ist. Aufgrund dieser Maßnahme wird in der Aufklappstellung des Deckels ein seitliches Verschieben ein Spiel und damit auch Geräuschentwicklung vermieden.

Des weiteren ist es von Vorteil vorgesehen, dass der Deckel und Halter über eine Zwangssteuerung gekoppelt sind, so dass der Deckel in der Aufklappstellung unter Spannung steht.

Hierzu ist es insbesondere vorgesehen, dass die Zwangssteuerung durch eine Führungsbahn sowie ein Nocken gebildet ist, über die Deckel und Halter bewegungsgekoppelt sind.

Dabei bietet es sich an, dass der Nocken bei nicht völlig in der Aufklappstellung befindlichem Deckel gegen einen Anschlag anschlägt, wobei sich dann bei Überführung des Deckels in die Aufklappstellung eine Vorspannung aufbaut.

Weitere Ziele, Merkmale, Vorteile und Anwendungsmöglichkeiten der vorliegenden Erfindung ergeben sich aus der nachstehenden Beschreibung der Ausführungsbeispiele anhand der Figuren.

Es zeigen:
- Figur 1: in perspektivischer Seitenansicht ein Ausführungsbeispiel einer möglichen Ausführungsform einer erfindungsgemäßen Haltevorrichtung in der Aufklappstellung,
- Figur 2: eine perspektivische Vorderansicht der Haltevorrichtung der Figur 1,
- Figur 3: eine perspektivische Schrägansicht der Haltevorrichtung der Figur 2 mit aufgeklappten Becherklappen,
- Figur 4: eine Seitenansicht der Haltevorrichtung der Figur 3,
- Figur 5: eine Ansicht der Haltevorrichtung ohne die Halter zur Verdeutlichung der Ausbildung der Hebel,
- Figur 6: eine Seitenansicht der Haltevorrichtung in der Schließstellung, wobei das Gehäuse aus Gründen der Übersicht transparent dargestellt ist,
- Figur 7: eine Ansicht der Haltevorrichtung der Figur 5, wobei die Hebel und eine Innenblende des Deckels nicht dargestellt sind, um die Anordnung und Ausbildung der Verriegelungsmittel zu verdeutlichen,
- Figur 8: eine Seitenansicht eines weiteren Ausführungsbeispiels einer Haltevorrichtung in der Einbaulage in einer Konsole eines Kraftfahrzeuges in der Aufklappstellung,
- Figur 9: ein weiteres Ausführungsbeispiel der erfindungsgemäßen Haltevorrichtung in Aufklappstellung,
- Figur 10: eine Draufsicht auf ein weiteres Ausführungsbeispiel der erfindungsgemäßen Haltevorrichtung in zwei unterschiedlichen Varianten und
- Figur 11: ein weiteres Ausführungsbeispiel der erfindungsgemäßen Haltevorrichtung mit Zwangssteuerung zwischen Deckel und Halter.

In den Figuren zur Darstellung der Ausführungsbeispiele ist eine Haltevorrichtung 10 für Behälter 12, zum Beispiel Getränkebehälter oder dergleichen, insbesondere zur Anbringung in Fahrzeugen, zum Beispiel in Kraftfahrzeugen, dargestellt.

Die Haltevorrichtung 10 weist ein Gehäuse 14 auf, welches mit einem Deckel 16 verschließbar ist. Der Deckel 16 ist zwischen einer das Gehäuse 14 im wesentlichen verschließenden Schließstellung 18, in der die Haltevorrichtung 10 in dem Gehäuse 14 aufgenommen ist, und einer Aufklappstellung 20, in der der Behälter 12 in die Haltevorrichtung 10 einbringbar ist, verschwenkbar. Weiterhin sind Haltemittel 22 für den Behälter vorgesehen, die verschwenkbar am Gehäuse 14 gelagert sind, wobei die Haltemittel 22 über Gelenkmittel 24, bevorzugt zwangsgesteuert, über den Deckel 16 gekoppelt sind.

Die Haltemittel 22 umfassen wenigstens einen oberen und einen unteren Halter 26, 28 für das Behältnis 12. Jeder der Halter 26, 28 ist jeweils um eine unterschiedliche Schwenkachse 30, 32 schwenkbar am Gehäuse 14 gelagert. Die Gelenkmittel 24 weisen zwei Hebel 34, 36 auf, wie dies insbesondere aus Figur ' 5 ersichtlich ist. Die Hebel 34, 36 sind einends am Deckel 16 und anderenends jeweils an einem Halter 26, 28 angelenkt. Bei dem hier gewählten Ausführungsbeispiel ist der Deckel 16 zweiteilig ausgebildet.

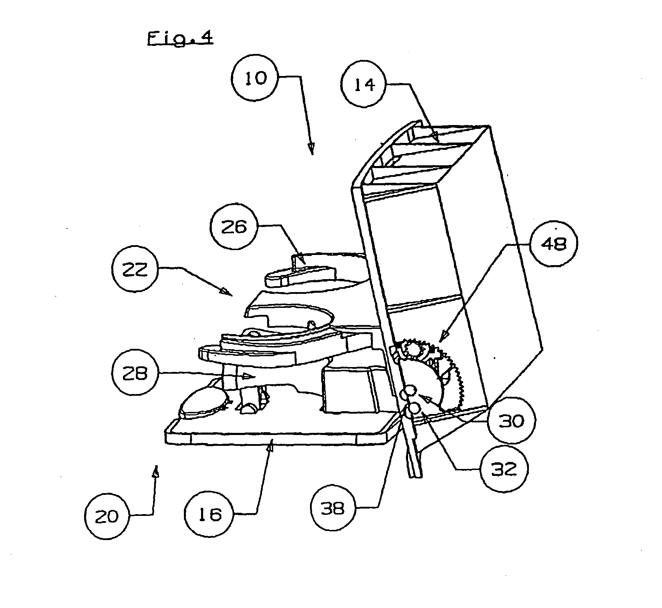

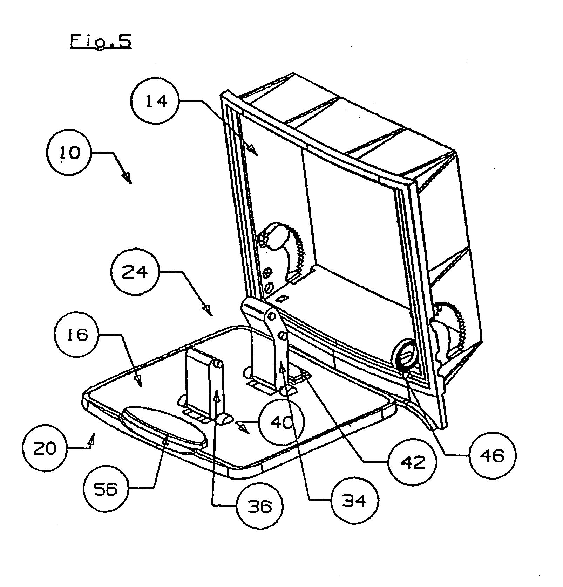

Wie beispielsweise der Figur 4 zu entnehmen ist, sind die Schwenkachsen 30, 32 der Halter 26, 28 im unteren Randbereich 38 des Gehäuses 14 parallel und zueinander versetzt angeordnet. Die Hebel 34, 36 sind unterschiedlich lang ausgebildet, wobei die Hebel ein Längenverhältnis bevorzugt zwischen 1,2:1 bis 1,5:1 besitzen. Wie ebenfalls aus Figur 5 ersichtlich ist, ist der kürzere Hebel 36 länglich gestreckt gerade ausgebildet, während der kürzere Hebel 34 für den oberen Halter 26 eine Abkröpfung am freien Ende besitzt. Die Hebel 34, 36 sind in einem Mittelabschnitt 40 der Innenseite des Deckels 16 versetzt zueinander angelenkt. Die Anlenkung am Deckel 16 wie auch an den Haltern 26, 28 erfolgt mit gängigen Mitteln, wie Achsen, Zapfen oder dergleichen.

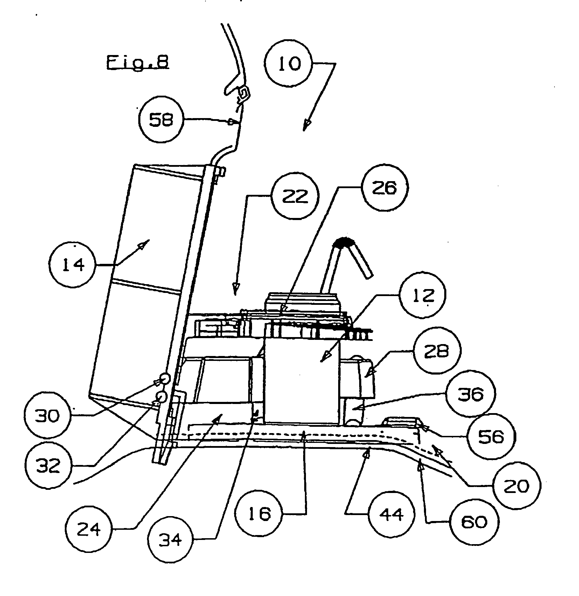

Der Schwenkbereich der Hebel 34, 36 und/oder Halter 26, 28 ist durch Anschlagmittel 42 begrenzt, welche im Bereich der Innenseite des Deckels 16 beziehungsweise im Bereich der Schwenklagerung der Halter 26, 28 am Gehäuse 14 angeordnet sind. Wie aus der Figur 8 ersichtlich ist, können die Anschlagmittel 44 auch beispielsweise durch einen Boden des Fahrzeuges, in dem die Haltevorrichtung 10 eingebaut ist, gebildet sein. Gemäß diesem Ausführungsbeispiel ist die Haltevorrichtung 10 in einer Konsole 58 des Fahrzeuges eingebaut, wobei dann das Gehäuse 14 in der Konsole 58 aufgenommen ist und der Deckel 16 sich in der Aufklappstellung 20 an einem Boden 60 oder einem sonstigen Bauteil des Fahrzeuges abstützt.

Aus Figur 5 ist ersichtlich, dass zwischen dem Gehäuse 14 und den Haltemitteln 22 eine Antriebsfeder 46 gespannt ist, die den Deckel 16 beziehungsweise die Halter 26, 28 in die Aufklappstellung 20 zu überführen trachtet. Weiterhin ist gemäß Figur 4 zwischen dem Gehäuse 14 und den Haltemitteln 22 eine Bremsvorrichtung 48 geschaltet, die eine kontrollierte Steuerung der Öffnungsbewegung des Deckels 16 von der Schließstellung 18 in die Aufklappstellung 20 gewährleistet.

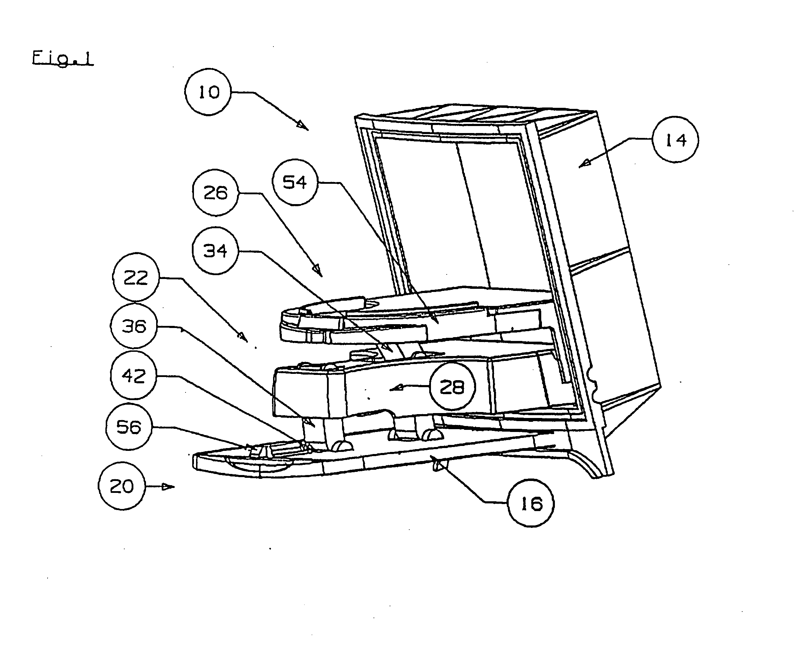

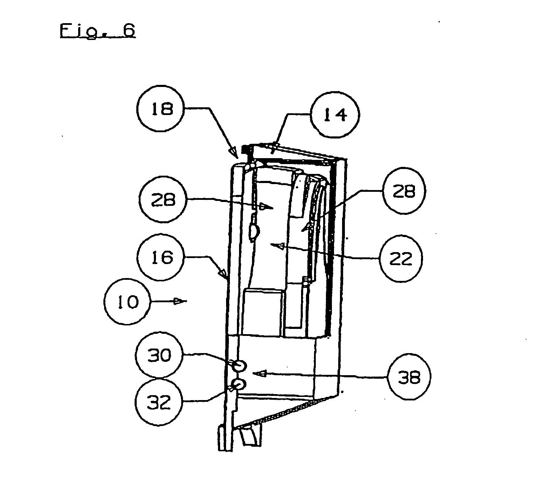

Wie insbesondere ein Vergleich der Figuren 1 und 8 mit der Figur 6 zeigt, weisen der untere und obere Halter 26, 28 aufgrund der Anordnung der Schwenkachsen 30, 32 und Ausbildung und/oder Anlenkung der Hebel 34, 36 in der Aufklappstellung 20 des Deckels 16 einen größeren Abstand voneinander auf als in der Schließstellung 18 des Deckels 16.

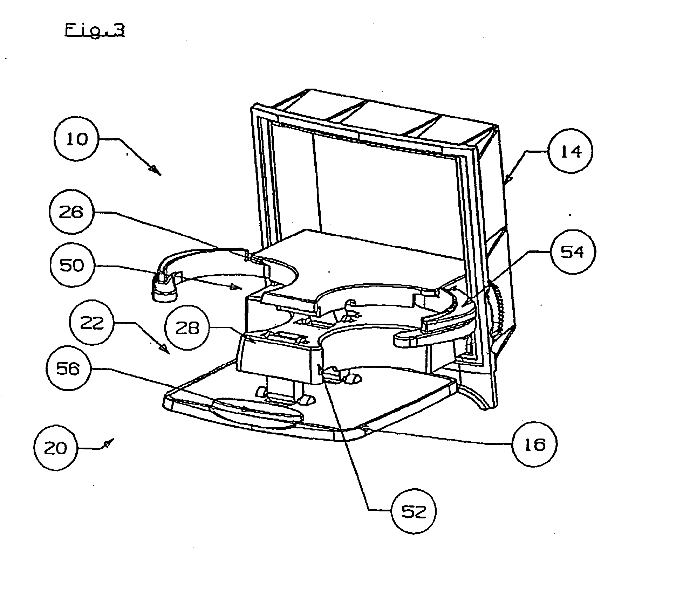

Aus Figur 3 ist ersichtlich, dass die Halter 26, 28 Ringabschnitte 50, 52 besitzen, die dem Behälter umfangsseitig anliegen. Wie in den Figuren 1 bis 4 dargestellt, trägt wenigstens einer der Halter 26, 28, bevorzugt der obere Halter 26, eine verschwenkbare, federbelastete Klappe 54, die dem Behälter 12 umfangsseitig federvorgespannt anliegt und zu einer sicheren Halterung des Behälters 12 beiträgt.

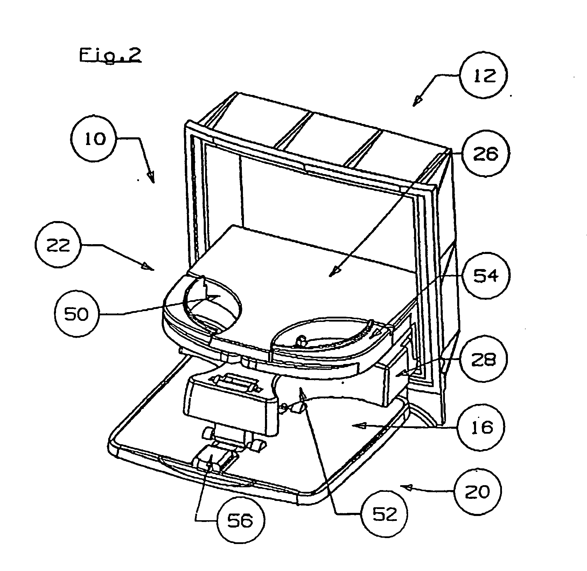

Gemäß den Figuren 2, 3 sind die Halter 26, 28 relativ zu einer Mittelquerebene im wesentlichen spiegelsymmetrisch ausgebildet, so dass die Haltevorrichtung 10 zur Aufnahme und Halterung von beispielsweise zwei Behältern 12 verwendet werden kann.

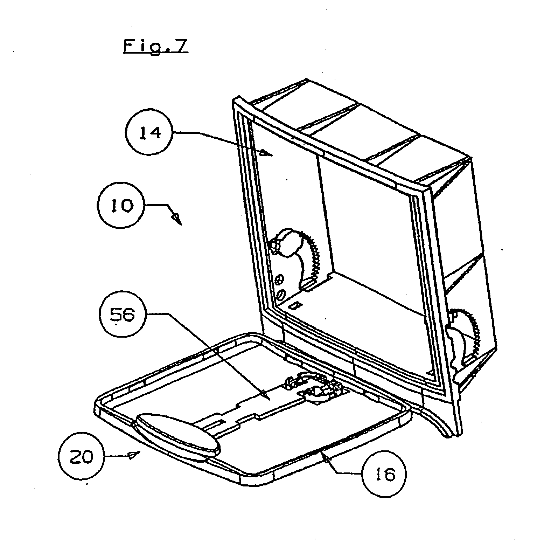

Der Deckel 16 selbst weist Verriegelungsmittel 56 auf, mittels derer der Deckel 16 in der Schließstellung 18 lösbar am Gehäuse 14 festgelegt ist. Diese Verriegelungsmittel 56 sind, wie beispielsweise ein Vergleich der Figuren 5 und 7 zeigt, größtenteils hinter einer Deckelblende verdeckt angebracht.

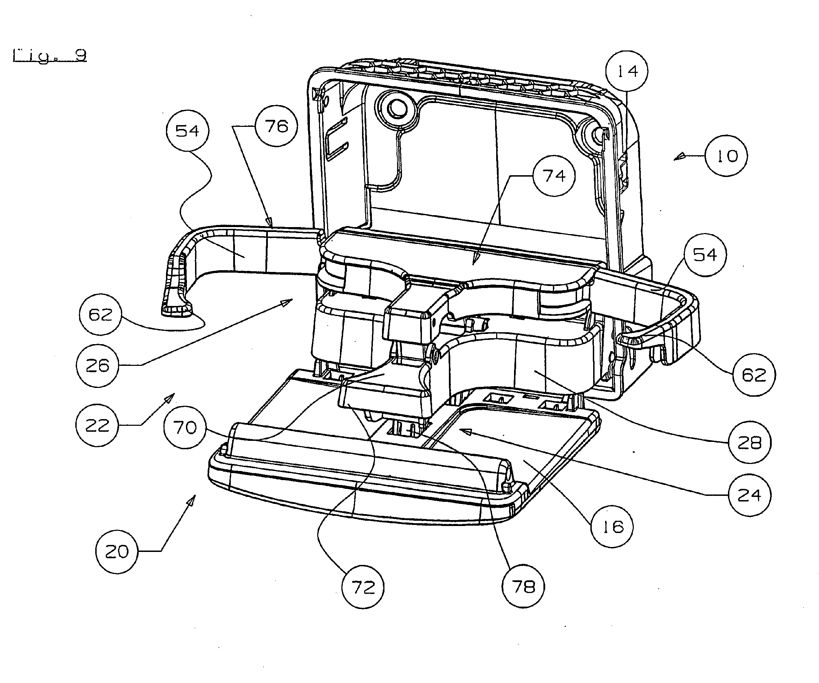

In Figur 9 ist in Abwandlung zu den vorhergehenden Ausführungsbeispielen eine Haltevorrichtung 10 mit zwei verschwenkbaren Becherklappen 54 dargestellt, wobei die Becherklappen 54 am endseitigen freien Ende eine wulstartige, zum Behälter 12 gerichtete Verdickung 62 besitzen.

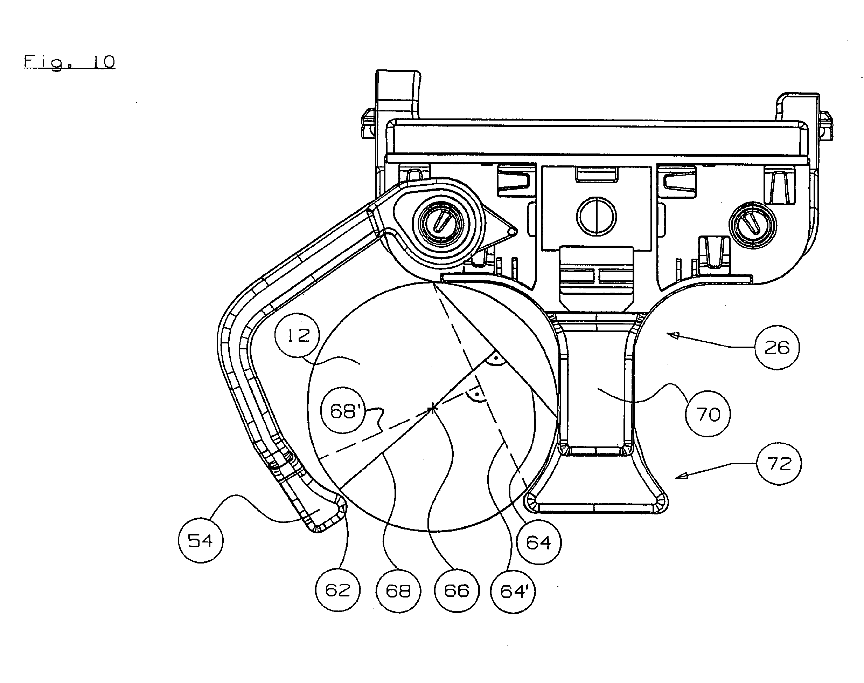

Des weiteren besteht die Möglichkeit, wie dies ebenfalls der Figur 9 wie auch der Figur 10 zu entnehmen ist, wenigstens einen der Halter 26, 28 mit einem solchen Mittelsteg 70 auszustatten, dessen freier Endabschnitt ein Knochenprofil 72 besitzt. In Figur 10 sind die Verhältnisse in zwei Modifikationen dargestellt, nämlich einerseits für einen i. w. eben ausgebildeten Mittelsteg 70 sowie für einen Mittelsteg 70 der ein endseitiges Knochenprofil 72 besitzt.

Eingezeichnet in Figur 10 ist ein Behälter 12, der eine 2-Punkt-Anlage an dem Mittelsteg 70 bzw. den seitlichen Fortsätzen des Halters 26 bzw. 28 aufweist. Die 2-Punkt-Anlage wird zu einer 3-Punkt-Aufnahme durch Anlage der wulstartigen Verdickung 62 der Becherklappen 54. Diese Verdickung 62 ist dabei derart angeordnet, dass sie in der Haltestellung vor bzw. rechts von einer durch die Mittel-Längs-Achse 66 des Behälters 12 verlaufende Mittenorthogonale 68, 68' angeordnet ist, welche senkrecht auf der Anlagesekante 64, 64' des Behälters 12 am Mittelsteg 70 bzw. den seitlichen Vorsprüngen steht.

In Figur 10 sind die Verhältnisse einerseits für einen i. w. eben ausgebildeten Mittelsteg 70 sowie für einen ein Knochenprofil 72 aufweisenden Mittelsteg 72 dargestellt. Hierdurch wird bspw. bei Beschleunigungen des eine derartige Haltevorrichtung aufweisenden Fahrzeuges erreicht, dass dann, wenn der Behälter 12 entgegengesetzt der Fahrtrichtung die Haltevorrichtung 10 zu verlassen trachtet, die Becherklappe 54 dazu veranlasst wird, den Behälter 12 noch fester zu umschließen. Ein seitliches Ausweichen der Becherklappen 54 ist damit weitestgehend vermieden. Diese dynamischen Bedingungen werden bei dem vorliegenden Ausführungsbeispiel der Haltevorrichtung 10 für solche Behältnisse erreicht, die einen Durchmesser bis zu etwa 66 mm aufweisen.

Weiterhin ist aus Figur 10 auch ersichtlich, dass dann, wenn der Mittelsteg 70 ein Knochenprofil 72 aufweist, welches sich an den Umfang des Behälters 12 anschmiegt, eine verbesserte Einklemmung des Behälters 12 bei Fahrzeugbeschleunigungen erreicht wird.

Aus Figur 9 ist ersichtlich, dass eine Oberfläche 74 des Halters 26 in Bezug auf eine Oberkante 76 der Becherklappe 54 nach unten hin zum Deckel 16 abgesenkt ist. Aufgrund dieser Maßnahme wird das Einstecken eines Behälters 12 in die Haltevorrichtung 10 erleichtert. Der Behälter 12 ist lediglich auf die Oberfläche 74 abzusetzen und dann gegen die Becherklappe 54 zu bewegen, so dass diese durch Anlage des Behälters 12 in die Öffnungsstellung überführt werden, worauf dann der Behälter 12 in die Haltevorrichtung 10 völlig eingesetzt werden kann.

Zwischen Deckel 16 und Halter 26, 28 ist wenigstens eine seitliche Führung 78 angeordnet. Diese seitliche Führung 78 wirkt einem Verschieben, Wackelspiel oder einer Geräuschentwicklung des bspw. in der Aufklappstellung 20 befindlichen Deckels 16 entgegen.

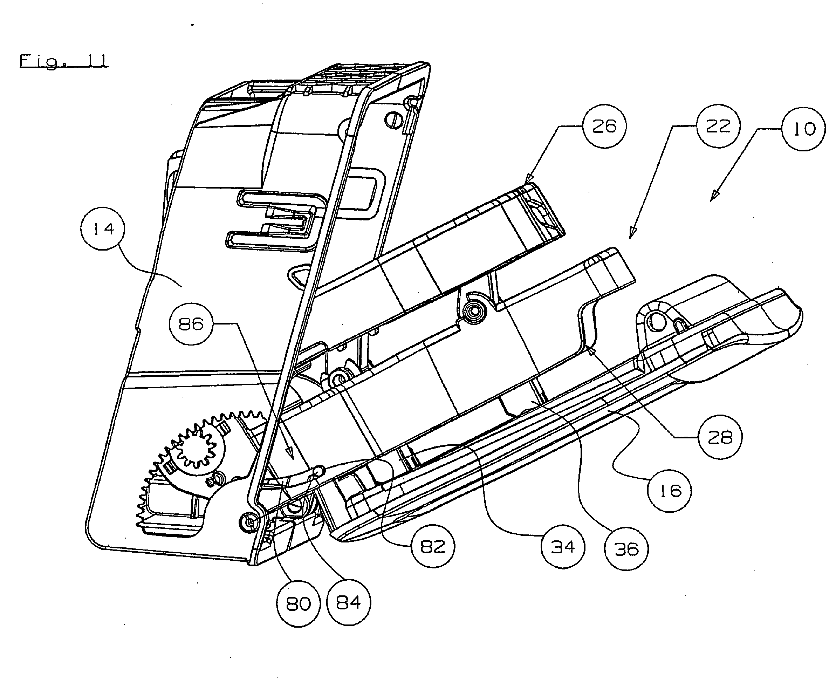

Der Deckel 16 und Halter 28 sind über eine Zwangssteuerung 86 gekoppelt, so dass der Deckel 16 in der Aufklappstellung 20 unter Spannung steht. Die Zwangssteuerung 86 wird durch eine Führungsbahn 80 sowie einen Nocken 84 bzw. Bolzen gebildet, über die der Deckel 16 und Halter 28 bewegungsgekoppelt sind. Der Nocken 84 schlägt bei noch nicht völlig in der Aufklappstellung 20 befindlichem Deckel 16 gegen einen Endanschlag 86 der Führungsbahn 80 an, wobei sich dann bei Überführen des Deckels 16 in die Aufklappstellung 20 eine Vorspannung aufbaut, wie diese in Figur 11 dargestellt ist.

### Bezugszeichenliste

- 10: Haltevorrichtung
- 12: Behälter
- 14: Gehäuse
- 16: Deckel
- 18: Schließstellung
- 20: Aufklappstellung
- 22: Haltemittel
- 24: Gelenkmittel
- 26: Halter
- 28: Halter
- 30: Schwenkachse
- 32: Schwenkachse
- 34: Hebel
- 36: Hebel
- 38: unterer Randbereich
- 40: Mittelabschnitt
- 42: Anschlagmittel
- 44: Anschlagmittel
- 46: Antriebsfeder
- 48: Bremsvorrichtung
- 50: Ringabschnitt
- 52: Ringabschnitt
- 54: Becherklappe
- 56: Verriegelungsmittel
- 58: Konsole
- 60: Boden
- 62: Verdickung, Wulst
- 64: Anlagesekante
- 64': Anlagesekante
- 66: Mittel-Längs-Achse
- 68: Mittenorthogonale
- 68': Mittenorthogonale
- 70: Mittelsteg
- 72: Knochenprofil
- 74: Oberfläche
- 76: Oberkante
- 78: Führung
- 80: Führungsbahn (an 28)
- 82: Endanschlag
- 84: Nocken
- 86: Zwangssteuerung

## Patentansprüche

1. Haltevorrichtung (10) für Behälter (12), wie Getränkebehälter, insbesondere zur Anbringung in Fahrzeugen, mit einem Gehäuse (14) und einem Deckel (16), der zwischen einer das Gehäuse (14) im wesentlichen verschließenden Schließstellung (18), in der die Haltevorrichtung (10) in dem Gehäuse (14) aufgenommen ist, und eine Aufklappstellung (20), in der der Behälter (12) in die Haltevorrichtung (10) einbringbar ist, verschwenkbar ist, und mit Haltemitteln (22) für den Behälter (12), die verschwenkbar am Gehäuse (14) gelagert sind, wobei die Haltemittel (22) über Gelenkmittel (24) mit dem Deckel (16) gekoppelt sind und wenigstens einen oberen und einen unteren Halter (26, 28) für das Behältnis (12) umfassen, die jeweils um eine unterschiedliche Schwenkachse (30, 32) schwenkbar am Gehäuse (14) gelagert sind, und die Gelenkmittel (24) zwei Hebel (34, 36) aufweisen, **dadurch gekennzeichnet, dass** die Hebel (34, 36) einenends schwenkbar am Deckel (16) angelenkt, anderenends jeweils an einem der Halter (26, 28) angelenkt sind und unterschiedliche Länge aufweisen.

2. Haltevorrichtung nach Anspruch 1, **dadurch gekennzeichnet, dass** die Schwenkachsen (30, 32) die Halter (26, 28) im unteren Randbereich (38) des Gehäuses (14) parallel zueinander versetzt angeordnet sind.

3. Haltevorrichtung nach Anspruch 1 oder 2, **dadurch gekennzeichnet, dass** die Hebel (34, 36) unterschiedliche Längen mit einem Längenverhältnis 1,2:1 bis 2,5:1 aufweisen.

4. Haltevorrichtung nach einem der vorhergehenden Ansprüchen, **dadurch gekennzeichnet, dass** die Hebel (34, 36) in einem Mittelabschnitt (40) des Deckels (16) versetzt zueinander angelegt sind.

5. Haltevorrichtung nach einem der vorhergehenden Ansprüche, **dadurch gekennzeichnet, dass** der Schwenkbereich der Hebel (34, 36) und/oder Halter (26, 28) durch Anschlagmittel (42, 44) begrenzt ist.

6. Haltevorrichtung nach einem der vorhergehenden Ansprüche, **dadurch gekennzeichnet, dass** zwischen Gehäuse (14) und Haltemittel (22) eine Antriebsfeder (46) gespannt ist, die den Deckel (16) in die Aufklappstellung (20) zu überführen trachtet

7. Haltevorrichtung nach einem der vorhergehenden Ansprüche, **dadurch gekennzeichnet, dass** zwischen Gehäuse (14) und Haltemittel (22) eine Bremsvorrichtung (48) geschaltet ist.

8. Haltevorrichtung nach einem der vorhergehenden Ansprüche **dadurch gekennzeichnet, dass** der untere und obere Halter (26, 28) aufgrund der Anordnung der Schwenkachsen (30, 32) und Ausbildung und/oder Anlenkung der Hebel (34, 36) in der Aufklappstellung (20) des Deckels (16) einen größeren Abstand voneinander aufweisen als in der Schließstellung (18) des Deckels.

9. Haltevorrichtung nach einem der vorhergehenden Ansprüche, **dadurch gekennzeichnet, dass** die Halter (26, 28) Ringabschnitte (50, 52) aufweisen, die am Behälter (12) umfangsseitig anliegen.

10. Haltevorrichtung nach einem der vorhergehenden Ansprüche, **dadurch gekennzeichnet, dass** wenigstens ein Halter (26, 28), bevorzugt der obere Halter (26), eine verschwenkbare, federbelastete Becherklappe (54) trägt, die dem Behälter (12) umfangsseitig federvorgespannt anliegt.

11. Haltevorrichtung nach einem der vorhergehenden Ansprüche, **dadurch gekennzeichnet, dass** die Halter (26, 28) im wesentlichen spiegelsymmetrisch zur Aufnahme und Halterung von zwei Behältern (12) ausgebildet sind.

12. Haltevorrichtung nach einem der vorhergehenden Ansprüche, **dadurch gekennzeichnet, dass** der Deckel (16) Verriegelungsmittel (56) aufweist, die den Deckel (16) in der Schließstellung (18) lösbar am Gehäuse (14) festlegen.

13. Haltevorrichtung nach einem der vorhergehenden Ansprüche, **gekennzeichnet durch** den Einbau in eine Konsole (58) eines Fahrzeuges, wobei bevorzugt der Deckel (16) in der Aufklappstellung (20) einem Boden (60) des Fahrzeuges oder einem sonstigen Fahrzeugbauteil als Anschlagmittel (44) aufliegt.

14. Haltevorrichtung nach einem der vorhergehenden Ansprüche, wobei ein Halter (26, 28) wenigstens eine verschwenkbare Becherklappe (54) trägt, **dadurch gekennzeichnet, dass** die Becherklappe (54) am endseitigen freien Ende eine wulstartige, zum Behälter (12) hin gerichtete Verdickung (62) besitzt.

15. Haltevorrichtung nach einem der vorhergehenden Ansprüche, **dadurch gekennzeichnet, dass** wenigstens einer der Halter (26, 28) einen Mittelsteg (70) aufweist, dessen freier Endabschnitt ein Knochenprofil (72) besitzt.

16. Haltevorrichtung nach einem der vorhergehenden Ansprüche, wobei ein Halter (26) wenigstens eine verschwenkbare Becherklappe (54) trägt, **dadurch gekennzeichnet, dass** eine Oberfläche (74) des Halters (26) in Bezug auf eine Oberkante (76) der Becherklappe (54) nach unten hin zum Deckel (16) abgesenkt ist.

17. Haltevorrichtung nach einem der vorhergehenden Ansprüche, **dadurch gekennzeichnet, dass** zwischen Deckel (16) und Halter (26, 28) wenigstens eine seitliche Führung (78) angeordnet ist.

18. Haltevorrichtung nach einem der vorhergehenden Ansprüche, **dadurch gekennzeichnet, dass** Deckel (16) und Halter (28) über eine Zwangssteuerung (86) gekoppelt sind, so dass der Deckel (16) in der Aufklappstellung (20) unter Spannung steht.

19. Haltevorrichtung nach Anspruch 18, **dadurch gekennzeichnet, dass** die Zwangssteuerung (86) durch eine Führungsbahn (80) sowie einen Nocken (84) gebildet ist, über die Deckel (16) und Halter (28) bewegungsgekoppelt sind.

20. Haltevorrichtung nach Anspruch 19, **dadurch gekennzeichnet, dass** der Nocken bei noch nicht völlig in der Aufklappstellung (20) befindlichem Deckel (16) gegen einen Endanschlag (82) anschlägt, wobei sich dann bei Überführen des Deckels (16) in die Aufklappstellung (20) eine Vorspannung aufbaut.

## Claims

1. Holding device (10) for containers (12), such as beverage containers, particularly for mounting in vehicles, comprising a housing (14) and a cover (16), which is pivotable between a closed setting (18), which substantially closes the housing (14) and in which the holding device (10) is received in the housing (14), and an opened setting (20), in which the container (12) is introducible into the holding device (10), and with holding means (22), which are pivotably mounted at the housing (14), for the container (12), wherein the holding means (22) are coupled with the cover (16) by way of articulation means (24) and comprise at least one upper and at least one lower holder (26, 28) for the container (12), which are each mounted at the housing (14) to be pivotable about a different pivot axis (30, 32), and the articulation means (24) comprise two levers (34, 36), **characterised in that** the levers (34, 36) are pivotably articulated at one end to the cover (16) and are each articulated at the other end to one of the holders (26, 28) and have different lengths.

2. Holding device according to claim 1, **characterised in that** the pivot axes (30, 32) of the holders (26, 28) are arranged in the lower edge region (38) of the housing (14) to be parallel and offset relative to one another.

3. Holding device according to claim 1 or 2, **characterised in that** the levers (34, 36) have different lengths with a length ratio 1.2:1 to 2.5:1.

4. Holding device according to one of the preceding claims, **characterised in that** the levers (34, 36) are placed offset relative to one another in a centre section (40) of the cover (16).

5. Holding device according to one of the preceding claims, **characterised in that** the pivot range of the levers (34, 36) and/or holders (26, 28) is limited by abutment means (42, 44).

6. Holding device according to one of the preceding claims, **characterised in that** a drive spring (46), which seeks to transfer the cover (16) to the opened setting (20), is biased between housing (14) and holding means (22).

7. Holding device according to one of the preceding claims, **characterised in that** a brake device (48) is connected between the housing (14) and holding means (22).

8. Holding device according to one of the preceding claims, **characterised in that** the lower and upper holders (26, 28) have in the opened setting (20) of the cover (16) a greater spacing from one another than in the closed setting (18) of the cover due to the arrangement of the pivot axes (30, 32) and construction and/or articulation of the levers (34,36).

9. Holding device according to one of the preceding claims, **characterised in that** the holders (26, 28) have annular sections (50, 52) bearing against the container (12) at the circumference.

10. Holding device according to one of the preceding claims, **characterised in that** at least one holder (26, 28), preferably the upper holder (26), carries a pivotable springloaded beaker flap (54) which bears with spring bias against the container (12) at the circumference.

11. Holding device according to one of the preceding claims, **characterised in that** the holders (26, 28) are constructed substantially in mirror symmetry for reception and holding of two containers (12).

12. Holding device according to one of the preceding claims, **characterised in that** the cover (16) comprises locking means (56) which detachably fix the cover (16) in the closed setting (18) at the housing (14).

13. Holding device according to one of the preceding claims, **characterised by** installation in a console (58) of a vehicle, wherein the cover (16) in the opened setting (20) preferably rests on a floor (60) of the vehicle or another vehicle component as abutment means (44).

14. Holding device according to one of the preceding claims, wherein a holder (26, 28) carries at least one pivotable beaker flap (54), **characterised in that** the beaker flap (54) has at the end-side free end a bead-like thickening (62) directed towards the container (12).

15. Holding device according to one of the preceding claims, **characterised in that** at least one of the holders (26, 28) has a centre web (70), the free end section of which has a bone profile (72).

16. Holding device according to one of the preceding claims, wherein a holder (26) carries at least one pivotable beaker flap (54), **characterised in that** a surface (74) of the holder (26) is recessed downwardly towards the cover (16) with respect to an upper edge (76) of the beaker flap (54).

17. Holding device according to one of the preceding claims, **characterised in that** at least one lateral guide (78) is arranged between cover (16) and holder (26, 28).

18. Holding device according to one of the preceding claims, **characterised in that** cover (16) and holder (28) are coupled by way of a constrained control (86) so that the cover (16) stands in the opened setting (20) under bias.

19. Holding device according to claim 18, **characterised in that** the constrained control (86) is formed by a guide track (80) as well as a cam (84), by way of which the cover (16) and holder (28) are coupled in movement.

20. Holding device according to claim 19, **characterised in that** the cam abuts against an end abutment (82) when the cover (16) is still not completely located in the opened setting (20), wherein then a bias builds up on transfer of the cover (16) to the opened setting (20).

## Revendications

1. Dispositif de retenue (10) pour récipients (12), comme des récipients pour boissons, destiné notamment à être installé dans des véhicules, comportant un boîtier (14) et un couvercle (16) qui est peut être pivoté entre une position fermée (18) fermant sensiblement le boîtier (14) et dans laquelle le dispositif de retenue (10) est reçu dans le boîtier (14), et une position relevée (20), dans laquelle le récipient (12) peut être introduit dans le dispositif de retenue (10), et comportant des moyens de retenue (22) pour le récipient (12), lesquels moyens sont logés de manière à pouvoir pivoter au niveau du boîtier (14), les moyens de retenue (22) étant couplés par des moyens d'articulation (24) au couvercle (16) et comprenant au moins un support supérieur et inférieur (26, 28) pour le récipient (12), lesquels sont respectivement logés au niveau du boîtier (14) de manière à pouvoir pivoter autour d'un axe de pivotement (30, 32) différent, et les moyens d'articulation (24) présentant deux leviers (34, 36), **caractérisé en ce que** les leviers sont, à une extrémité, articulés de manière à pouvoir pivoter au niveau du couvercle (16) et, à l'autre extrémité, articulés respectivement à un des supports (26, 28) et présentent des longueurs différentes.

2. Dispositif de retenue selon la revendication 1, **caractérisé en ce que** les axes de pivotement (30, 32) des supports (26, 28) sont disposés de manière décalée parallèlement les uns par rapport aux autres dans la zone périphérique inférieure (38) du boîtier (14).

3. Dispositif de retenue selon la revendication 1 ou 2, **caractérisé en ce que** les leviers (34, 36) présentent différentes longueurs avec un rapport entre les longueurs allant de 1,2: 1 à 2,5:1.

4. Dispositif de retenue selon l'une quelconque des revendications précédentes, **caractérisé en ce que** les leviers (34, 36) sont placés de manière décalée l'un par rapport à l'autre dans une section centrale (40) du couvercle (16).

5. Dispositif de retenue selon l'une quelconque des revendications précédentes, **caractérisé en ce que** la zone de pivotement des leviers (34, 36) et/ou des supports (26, 28) est limitée par des moyens de butée (42, 44).

6. Dispositif de retenue selon l'une quelconque des revendications précédentes, **caractérisé en ce qu'**un ressort d'entraînement (46) est tendu entre le boîtier (14) et les moyens de retenue (22), lequel ressort vise à faire passer le couvercle (16) dans la position relevée (20).

7. Dispositif de retenue selon l'une quelconque des revendications précédentes, **caractérisé en ce qu'**un dispositif de freinage (48) est branché entre le boîtier (14) et les moyens de retenue (22).

8. Dispositif de retenue selon l'une quelconque des revendications précédentes, **caractérisé en ce que** le support inférieur et supérieur (26, 28), du fait de la disposition des axes de pivotement (30, 32) et de la réalisation et/ou de l'articulation des leviers (34, 36), sont, dans la position relevée (20) du couvercle (16), situés à une distance plus grande l'un de l'autre que dans la position fermée (18) du couvercle.

9. Dispositif de retenue selon l'une quelconque des revendications précédentes, **caractérisé en ce que** les supports (26, 28) présentent des sections annulaires (50, 52), qui reposent sur le récipient (12) côté circonférence.

10. Dispositif de retenue selon l'une quelconque des revendications précédentes, **caractérisé en ce qu'**au moins un support (26, 28), de préférence le support supérieur (26), supporte un clapet à gobelet pouvant pivoter et chargé par ressort (54), qui repose sous précontrainte du ressort sur le récipient (12) côté circonférence.

11. Dispositif de retenue selon l'une quelconque des revendications précédentes, **caractérisé en ce que** les supports (26, 28) sont réalisés sensiblement symétriquement en miroir afin de recevoir et de retenir deux récipients (12).

12. Dispositif de retenue selon l'une quelconque des revendications précédentes, **caractérisé en ce que** le couvercle (16) présente des moyens de verrouillage (56) qui, dans la position fermée (18), fixent le couvercle (16) de manière amovible sur le boîtier (14).

13. Dispositif de retenue selon l'une quelconque des revendications précédentes, **caractérisé par** le montage dans une console (58) d'un véhicule, le couvercle (16) reposant de préférence, dans la position relevée (20), sur un plancher (60) du véhicule ou sur un autre composant du véhicule en tant que moyen de butée (44).

14. Dispositif de retenue selon l'une quelconque des revendications précédentes, dans lequel un support (26, 28) supporte au moins un clapet à gobelet pouvant pivoter (54), **caractérisé en ce que** le clapet à gobelet (54) possède, au niveau de son extrémité terminale libre, un épaississement en forme de bourrelet (62) dirigé vers le récipient (12).

15. Dispositif de retenue selon l'une quelconque des revendications précédentes, **caractérisé en ce qu'**au moins un des récipients (26, 28) présente une traverse centrale (70) dont la section terminale libre possède un profilé en forme d'osselet (72).

16. Dispositif de retenue selon l'une quelconque des revendications précédentes, dans lequel un support (26) supporte au moins un clapet à gobelet pouvant pivoter (54), **caractérisé en ce qu'**une surface (74) du support (26) est abaissée en direction du couvercle (16) par rapport à une arête supérieure (76) du clapet à gobelet (54).

17. Dispositif de retenue selon l'une quelconque des revendications précédentes, **caractérisé en ce qu'**au moins un guide latéral (78) est disposé entre le couvercle (16) et les supports (26, 28).

18. Dispositif de retenue selon l'une quelconque des revendications précédentes, **caractérisé en ce que** le couvercle (16) et le support (28) sont couplés par une commande forcée (86), de sorte que le couvercle (16), dans la position relevée (20), est sous tension.

19. Dispositif de retenue selon la revendication 18, **caractérisé en ce que** la commande forcée (86) est formée par une voie de guidage (80) ainsi que par une came (84) grâce auxquelles le couvercle (16) et le support (28) sont couplés au niveau mouvement.

20. Dispositif de retenue selon la revendication 19, **caractérisé en ce que** la came bute contre une butée de fin de course (82), lorsque le couvercle (16) ne se trouve pas totalement en position relevée (20), une précontrainte s'établissant alors lors du passage du couvercle (16) dans la position relevée (20).
